# EUROPÄISCHE PATENTANMELDUNG

(11) **EP 1 728 674 A2**
(43) Veröffentlichungstag der Anmeldung: **06.12.2006**
(21) Anmeldenummer: 06010360.3
(22) Anmeldetag: 19.05.2006
(51) Int. Cl.: B60N 2/20

(54) **Beschlag für einen Fahrzeugsitz**

(30) Priorität: 01.06.2005 DE 102005025002
(71) Anmelder: KEIPER GmbH & Co. KG, 67657 Kaiserslautern (DE)
(72) Erfinder: Kraus, Martin, 67806 Katzenbach (DE); Hänsel, Richard, 55237 Flonheim (DE)
(74) Vertreter: Patentanwälte Hosenthien-Held und Dr. Held

(57) **Zusammenfassung**

Bei einem Beschlag (5) für einen Fahrzeugsitz, insbesondere Kraftfahrzeugsitz, mit einem ersten Beschlagteil (7), einem zweiten Beschlagteil (8), welches relativ zum ersten Beschlagteil (7) um einen Lehnenbolzen (10) schwenkbar ist, einer mittels eines Lagerbolzens (13) schwenkbar am ersten Beschlagteil (7) gelagerten Sperrklinke (11), welche zum Verriegeln des Beschlags (5) mit dem zweiten Beschlagteil (8) zusammenwirkt, und einer Spannklinke (21), welche im verriegelten Zustand die Sperrklinke (11) im Normalfall und im Crashfall sichert, ist die Spannklinke (21) als eine auf Zugkräfte belastbare Zuglasche ausgebildet, welche im Crashfall dazu beiträgt, den Abstand zwischen dem Lehnenbolzen (10) und dem Lagerbolzen (13) zu halten.

## Beschreibung

Die Erfindung betrifft einen Beschlag für einen Fahrzeugsitz mit den Merkmalen des Oberbegriffs des Anspruches 1.

Aus der DE 44 39 644 A1 ist ein Beschlag dieser Art bekannt, bei dem zum Sichern der Sperrklinke die federbelastete Spannklinke eine exzentrisch gekrümmte Spannkontur für den Normalfall und eine sich daran anschließende, ebene Fangkontur für den Crashfall aufweist. Eine noch höhere Belastbarkeit im Crashfall bei geringen Kosten ist wünschenswert.

Der Erfindung liegt die Aufgabe zu Grunde, einen Beschlag der eingangs genannten Art zu verbessern. Diese Aufgabe wird erfindungsgemäß durch einen Beschlag mit den Merkmalen des Anspruches 1 gelöst. Vorteilhafte Ausgestaltungen sind Gegenstand der Unteransprüche.

Dadurch, dass die Spannklinke als eine auf Zugkräfte belastbare Zuglasche ausgebildet ist, welche im Crashfall dazu beiträgt, den Abstand zwischen dem Lehnenbolzen und dem Lagerbolzen zu halten, ist der Beschlag im Crashfall höher belastbar. Die Integration der Funktion als Zuglasche in die Spannklinke, welche die Anzahl der Bauteile nicht erhöht, ist zudem kostengünstig. Die bevorzugte Lagerung der Spannklinke am Lehnenbolzen spart einen gesonderten Lagerbolzen für die Spannklinke ein.

Für die Funktion als Zuglasche weist die Spannklinke vorzugsweise einen Haken auf, welcher im verriegelten Zustand den Lagerbolzen aufnimmt, insbesondere formschlüssig den Lagerbolzen umgreift.

Für die Funktion der Sicherung der Sperrklinke weist die Spannklinke vorzugsweise innerhalb einer Aussparung Konturen auf, welche vorzugsweise mit einem in die Aussparung ragenden Nocken einwirken, was eine bauraumsparende und kompakte Anordnung der Bauteile ermöglicht. Als Konturen zum Sichern sind vorzugsweise eine exzentrisch gekrümmte Spannkontur zum Beaufschlagen der Sperrklinke im Normalfall und eine beispielsweise konzentrische Fangkontur zum Abstützen der Sperrklinke im Crashfall vorgesehen. Es kann auch vorgesehen sein, dass der Haken mit einer Hakennase den Lagerbolzen im Crashfall formschlüssig umgreift.

Der erfindungsgemäße Beschlag kann für alle Fahrzeugsitze mit schwenkbarer Lehne oder sonstigen schwenkbaren und verriegelbaren Bauteilen verwendet werden.

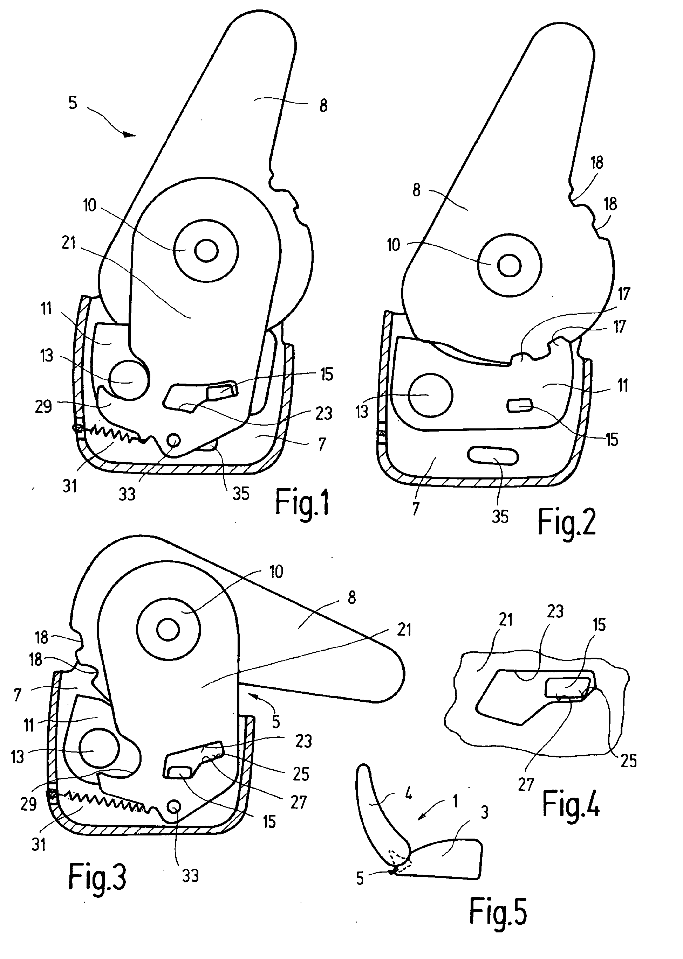

Im folgenden ist die Erfindung anhand eines in der Zeichnung dargestellten Ausführungsbeispiels mit einer Abwandlung näher erläutert. Es zeigen
- Fig. 1: einen Schnitt durch das Ausführungsbeispiels im verriegelten Zustand,
- Fig. 2: eine Darstellung entsprechend Fig. 1 ohne Spannklinke und Feder,
- Fig. 3: einen Schnitt durch das Ausführungsbeispiels im entriegelten Zustand,
- Fig. 4: eine Detailansicht von Fig. 1,
- Fig. 5: eine schematische Darstellung eines Fahrzeugsitzes, und

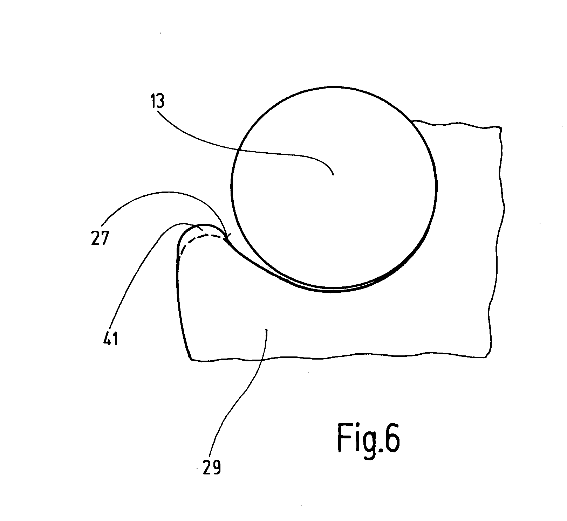

- Fig. 6: eine Teilansicht der Abwandlung.

Ein Fahrzeugsitz 1 einer hinteren Sitzreihe eines Kraftfahrzeuges weist ein Sitzteil 3 und eine Lehne 4 auf, welche mittels je eines Beschlags 5 auf jeder Fahrzeugsitzseite am Sitzteil 3 angebracht und relativ zu diesem schwenkbar und in zwei Stellungen verriegelbar ist, nämlich einer Gebrauchsstellung und einer Nichtgebrauchsstellung. Die verwendeten Richtungsangaben werden durch die Anordnung des Fahrzeugsitzes 1 innerhalb des Kraftfahrzeuges und dessen gewöhnliche Fahrtrichtung definiert. In der Gebrauchsstellung befindet sich die Lehne 4 in einer im wesentlichen aufrechten, leicht nach hinten geneigten Stellung, während sie in der Nichtgebrauchsstellung nach vorne geschwenkt ist, vorzugsweise in eine horizontale Tischstellung.

Jeder Beschlag 5 weist ein erstes Beschlagteil 7, welches an der Struktur des Sitzteiles 3 befestigt ist, und ein zweites Beschlagteil 8 auf, das an der Struktur der Lehne 4 befestigt ist. In abgewandelter Ausführung wird der Beschlag 5 mit dem ersten Beschlagteil 7 an der Lehne 4 und mit dem zweiten Beschlagteil 8 am Sitzteil 3 befestigt. Die beiden Beschlagteile 7 und 8 sind relativ zueinander um einen Lehnenbolzen 10 schwenkbar, welcher eine Lehnenschwenkachse definiert. Dabei ist das erste Beschlagteil 7 hohl ausgebildet, und das flache zweite Beschlagteil 8 ist teilweise innerhalb des ersten Beschlagteils 8 angeordnet und taucht beim Schwenken weiter ein bzw. auf. Eine innerhalb des ersten Beschlagteils 7 angeordnete Sperrklinke 11 ist schwenkbar an diesem mittels eines zum Lehnenbolzen 10 parallelen Lagerbolzens 13 gelagert. Von der Sperrklinke 11 steht parallel zum Lagerbolzen 13, d.h. in axialer Richtung, ein Nocken 15 ab, während zu dem in der gleichen Ebene befindlichen zweiten Beschlagteil 8 hin die Sperrklinke 11 zwei (oder mehr) Zähne 17 aufweist.

Der Beschlag 5 ist verriegelbar, indem die Sperrklinke 11 mittels dieses Paares von Zähnen 17 formschlüssig in ein Paar von Rasten 18 des zweiten Beschlagteils 8 greift. Dabei ist ein Paar von Rasten 18 für die Gebrauchsstellung und - um etwa 90° versetzt dazu - ein weiteres Paar von Rasten 18 für die Nichtgebrauchstellung vorgesehen. Um die Sperrklinke 11 im verriegelten Zustand zu sichern, ist eine Spannklinke 21 vorgesehen, welche schwenkbar am Lehnenbolzen 10 gelagert ist und mit ihrer flachen Grundform in einer Ebene parallel zum zweiten Beschlagteil 8 und zur Sperrklinke 11 angeordnet ist.

Die Spannklinke 21 weist einen Ausschnitt 23 auf, innerhalb dessen der Nocken 15 der Sperrklinke 11 zu liegen kommt. Innerhalb des Ausschnitts 23 ist an dem bezüglich des Lehnenbolzens 10 radial weiter außen gelegenen Rand eine bezüglich des Lehnenbolzens 10 exzentrisch gekrümmte Spannkontur 25 und benachbart dazu eine Fangkontur 27 ausgebildet, welche sich in der Schließ-Schwenkrichtung der Spannklinke 21 vorauseilend an die Spannkontur 25 anschließt. Mittels der Spannkontur 25 beaufschlagt die Spannklinke 21 im verriegelten Zustand die Sperrklinke 11 am Nocken 15, während die Fangkontur 27 in einem bezüglich der Höhe der Zähne 17 geringen Abstand zum Nocken 15 angeordnet ist. Dabei weist die Fangkontur 27 die gleiche Krümmung wie die ihr zugewandte Seite des Nockens 15 auf, indem sie beispielsweise konzentrisch zum Lehnenbolzen 10 gekrümmt oder geradlinig ausgebildet ist.

Die Spannklinke 21 weist ferner einen Haken 29 auf, dessen Maul sich in der Schließ-Schwenkrichtung öffnet und im verriegelten Zustand den Lagerbolzen 13 formschlüssig aufnimmt. Eine Feder 31 beaufschlagt die Spannklinke 21 so, dass im verriegelten Zustand des Beschlags 5 der Haken 29 gegen den Lagerbolzen 13 und die Spannkontur 25 gegen den Nocken 15 gedrückt wird. Von der Spannklinke 21 steht seitlich (d.h. axial) ein Entriegelungsbolzen 33 ab, welcher durch eine Kulisse 35 im ersten Beschlagteil 7 aus dem Beschlag 5 herausragt.

Zum Entriegeln des Beschlags 5 wird mittels des Entriegelungsbolzens 33 die Spannklinke 21 entgegen der Kraft der Feder 31 geschwenkt, wodurch sich die Spannkontur 25 und dann die - diesbezüglich nacheilende - Fangkontur 27 am Nocken 25 vorbei bewegen. Die Sperrklinke 11 kann nun öffnen, wobei ein - bezüglich der Spannkontur 25 und der Fangkontur 27 radial weiter außen gelegener - Randbereich des Ausschnitts 23 als Anschlag für den Nocken 25 dient. Aufgrund der geöffneten Sperrklinke 11 ist das zweite Beschlagteil 8 schwenkbar. Mit dem Aufschwenken der Spannklinke 21 gibt auch der Haken 29 den Lagerbolzen 13 frei.

Im Crashfall übt die Lehne 4 über das zweite Beschlagteil 8 ein öffnendes Moment auf die Sperrklinke 11 aus, welchem das über die exzentrische Spannkontur 25 wirksame schließende Moment der Feder 31 entgegensteht. Wenn die Crashkräfte so groß sind, dass das öffnende Moment größer als das schließende Moment ist, drückt die sich öffnende Sperrklinke 11 mittels des Nockens 15 auf die Spannklinke 21. Die Spannklinke 21 weicht zurück, worauf der Nocken 15 in formschlüssige Anlage an die Fangkontur 27 gelangt. Da über die konzentrische oder ebene Fangkontur 27 kein öffnendes Moment übertragen werden kann, wird die Sperrklinke 11 auf diese Weise abgestützt und kann nicht weiter öffnen. Die Sperrklinke 11 und das zweite Beschlagteil 8 bleiben miteinander verriegelt.

Bei noch größeren Crashkräften könnte die Gefahr bestehen, dass diese das erste Beschlagteil 7 verformen und dabei den Abstand zwischen dem Lehnenbolzen 10 und dem Lagerbolzen 13 der durch die Fangkontur 27 abgestützen Sperrklinke 11 vergrößern. Hiergegen ist die Spannklinke 11 aufgrund ihrer Lagerung auf dem Lehnenbolzen 10 und des Umgreifens des Lagerbolzens 13 durch ihren Haken 29 als eine Zuglasche ausgebildet, welche auf Zugkräfte belastbar ist und dadurch dazu beiträgt, den Abstand zwischen dem Lehnenbolzen 10 und dem Lagerbolzen 13 zu halten und letztendlich den verriegelten Zustand zwischen der Sperrklinke 11 und dem zweiten Beschlagteil 8 aufrecht zu erhalten.

In einer Abwandlung des Ausführungsbeispiels ist das Ende des Hakens 29 zu einer Hakennase 41 verlängert, welche - im Vergleich zum Ausführungsbeispiel - weiter um den Lagerbolzen 13 herum angeordnet. An der Hakennase 41 ist auf der dem Lagerbolzen 13 zugewandten Seite die Fangkontur 27 ausgebildet, während im Ausschnitt 23 nur die Spannkontur 25 verwirklicht ist. Ansonsten stimmt die Abwandlung mit dem Ausführungsbeispiel überein. Beim Entriegeln passiert die Hakennase 41 knapp den Lagerbolzen 13. Im Crashfall umgreift der Haken 29 mit der Hakennase 41 - aufgrund von elastischen Dehnungen - den Lagerbolzen 13 formschlüssig, womit ein Aufschwenken der Spannklinke 21 verhindert wird.

### Bezugszeichenliste

- 1: Fahrzeugsitz
- 3: Sitzteil
- 4: Lehne
- 5: Beschlag
- 7: erstes Beschlagteil
- 8: zweites Beschlagteil
- 10: Lehnenbolzen
- 11: Sperrklinke
- 13: Lagerbolzen
- 15: Nocken
- 17: Zahn
- 18: Raste
- 21: Spannklinke
- 23: Ausschnitt
- 25: Spannkontur
- 27: Fangkontur
- 29: Haken
- 31: Feder
- 33: Entriegelungsbolzen
- 35: Kulisse
- 41: Hakennase

## Patentansprüche

1. Beschlag für einen Fahrzeugsitz, insbesondere Kraftfahrzeugsitz, mit einem ersten Beschlagteil (7), einem zweiten Beschlagteil (8), welches relativ zum ersten Beschlagteil (7) um einen Lehnenbolzen (10) schwenkbar ist, einer mittels eines Lagerbolzens (13) schwenkbar am ersten Beschlagteil (7) gelagerten Sperrklinke (11), welche zum Verriegeln des Beschlags (5) mit dem zweiten Beschlagteil (8) zusammenwirkt, und einer Spannklinke (21), welche im verriegelten Zustand die Sperrklinke (11) im Normalfall und im Crashfall sichert, **dadurch gekennzeichnet, dass** die Spannklinke (21) als eine auf Zugkräfte belastbare Zuglasche ausgebildet ist, welche im Crashfall dazu beiträgt, den Abstand zwischen dem Lehnenbolzen (10) und dem Lagerbolzen (13) zu halten.

2. Beschlag nach Anspruch 1, **dadurch gekennzeichnet, dass** die Spannklinke (21) schwenkbar am Lehnenbolzen (10) gelagert ist.

3. Beschlag nach Anspruch 2, **dadurch gekennzeichnet, dass** die Spannklinke (21) einen Haken (29) aufweist, welcher im verriegelten Zustand den Lagerbolzen (13) aufnimmt, insbesondere formschlüssig aufnimmt.

4. Beschlag nach Anspruch 3, **dadurch gekennzeichnet, dass** der Haken (29) den Lagerbolzen (13) umgreift.

5. Beschlag nach einem der Ansprüche 1 bis 4, **dadurch gekennzeichnet, dass** die Spannklinke (21) innerhalb einer Aussparung (23) Konturen (25, 27) zum Sichern der Sperrklinke (11) aufweist.

6. Beschlag nach Anspruch 5, **dadurch gekennzeichnet, dass** die Spannklinke (21) mittels der Konturen (25, 27) auf einen Nocken (15) der Sperrklinke (11) einwirkt, welche in die Aussparung (23) ragt.

7. Beschlag nach Anspruch 5 oder 6, **dadurch gekennzeichnet, dass** die Spannklinke (21) eine exzentrisch gekrümmte Spannkontur (25) aufweist, mittels welcher sie die Sperrklinke (11) im Normalfall beaufschlagt.

8. Beschlag nach einem der Ansprüche 5 bis 7, **dadurch gekennzeichnet, dass** die Spannklinke (21) eine Fangkontur (27) aufweist, mittels welcher sie die Sperrklinke (11) im Crashfall abstützt.

9. Beschlag nach Anspruch 6 und 8, **dadurch gekennzeichnet, dass** die Fangkontur (27) und die mit der Fangkontur (27) zusammenwirkende Fläche des Nockens (15) konzentrisch gekrümmt zur Schwenkachse der Spannklinke (21) oder eben ausgebildet ist.

10. Beschlag nach einem der Ansprüche 4 bis 8, **dadurch gekennzeichnet, dass** der Haken (29) mit einer Hakennase (41) den Lagerbolzen (13) im Crashfall formschlüssig umgreift.

11. Fahrzeugsitz (1) mit einem Sitzteil (3) und einer Lehne (4), welche mittels wenigstens eines Beschlags (5) nach einem der Ansprüche 1 bis 10 am Sitzteil (3) angebracht ist.
